# EUROPÄISCHE PATENTSCHRIFT

(11) **EP 0 325 706 B1**
(45) Veröffentlichungstag und Bekanntmachung des Hinweises auf die Patenterteilung: **08.09.1993**
(21) Anmeldenummer: 88118218.2
(22) Anmeldetag: 02.11.1988
(51) Int. Cl.: B32B 31/20, B29C 43/24, B29C 59/04

(54) **Mehrwalzen-Beschichtungs- und Kaschierkalander zum Herstellen einer Verbundbahn aus Kunststoff- oder Kautschukfolien und textilen Verstärkungsbahnen**
Multi-roll coating and laminating calender for the production of composite bands consisting of a plastic or rubber foil of a reinforcing textile band
Calandre d'enduction et de laminage à plusieurs rouleaux pour la production d'une bande multicouche composée d'une bande en plastique ou en caoutchouc et d'une bande de renforcement textile

(30) Priorität: 23.01.1988 DE 3801902
(43) Veröffentlichungstag der Anmeldung: 02.08.1989
(73) Patentinhaber: HERMANN BERSTORFF Maschinenbau GmbH, D-30627 Hannover (Kleefeld) (DE)
(72) Erfinder: Heise, Wolfgang, D-3000 Hannover 51 (DE); Marquardt, Klaus-Dieter, Dipl.-Ing., D-3000 Hannover 61 (DE); Wöckener, Willi, D-3000 Hannover 61 (DE)

(56) Entgegenhaltungen:
- DE-C- 893 260
- DE-C- 894 767
- US-A- 1 603 813
- US-A- 3 361 609
- US-A- 3 455 756
- KUNSTSTOFFE, Band 71, Nr. 10, Oktober 1981, Seiten 743-746, München, DE; H. KOPSCH: "Kalandrieren und Beschichten"
- PLAST VERARBEITER, Band 31, Nr. 1, Januar 1980, Seiten 18-22, Speyer am Rhein, DE; C. COMERIO: "Behandlung von thermoplastischen Folien"
- KUNSTSTOFFE, Band 77, Nr. 1, Januar 1987, Seiten 30-37, Carl Hanser Verlag, München, DE; W.K. MENDE: "Kalander zum Herstellen doppeltbreiter Weichfolie"

## Beschreibung

Die Erfindung betrifft einen Mehrwalzen-Kalander der Gattung, wie beschrieben im Oberbegriff von Patentanspruch 1.

Aus der US-PS 3,455,756 ist ein Kalander bekannt, auf dem eine Kunststoffolie hergestellt und danach auf einer separaten Einrichtung mit einer weiteren Bahn kaschiert wird. Zu diesem Zweck ist dem Kalander eine aus zwei Walzen bestehende Kaschiereinrichtung nachgeordnet, auf der die auf dem Kalander hergestellte Folie mit einer Verstärkungsbahn oder dergl. zusammenkaschiert wird.

Es ist die Aufgabe der vorliegenden Erfindung, eine Kaschiereinrichtung, wie gezeigt in der US-PS 3,455,756, konstruktiv stark zu vereinfachen. Der Kalander soll sowohl als Beschichtungskalander für Gewebebahnen oder dergleichen als auch alternativ als reiner Kaschierkalander einsetzbar sein. Weiterhin soll mit dem Beschichtungs- und Kaschierkalander ein optimaler hochqualitativer Beschichtungsvorgang einer Gewebebahn mit einer auf dem Kalander selbst herstellten Kunststoffolie als auch ein ausgezeichneter Kaschiervorgang, ausgehend von einer bereits fertigen, auf ein Gewebe zu kaschierenden Kunststoffolie durchführbar sein.

Die Aufgabe wird durch die im kennzeichnenden Teil des Patentanspruchs genannten Merkmale gelöst.

Durch die Anordnung der in Arbeitsrichtung letzten Walze des Folienherstellkalanders in den Kalanderständern als Festwalze wird erreicht, daß diese Walze gleichzeitig sowohl
- Kalandrierarbeit leistet im Spalt zwischen der vorletzen und letzten Walze, als insbesondere auch
- einen Beschichtungsvorgang im Spalt zwischen einer Aufheizwalze und der letzten Walze durchführt und
- einen weiteren Kaschiervorgang im Spalt zwischen der letzten Kalanderwalze und einer Kaschierwalze durchgeführt.

Es wird in erster Linie jedoch eine erhebliche Vereinfachung der Gesamtkonstruktion und die Einsparung einer Kaschierwalze erreicht.

Diese Vorteile sind durch die Anordnung der in Arbeitsrichtung letzten Kalanderwalze als Festwalze realisierbar, weil einer, nicht zur Kalanderspaltverstellung herangezogenen Walze weitere Walzen, wie die Aufheizwalze und die Kaschierwalze zugeordnet werden können, was jedoch nur möglich ist, wenn diese Walze nicht verstellt, d.h. aus der Ebene der Walzen herausgefahren werden muß.

Wenn die letzte Walze eines Beschichtungs- und Kaschierkalanders beweglich gestaltet wird, was in der Vergangenheit der Fall war, müssen
- die Nachfolgeeinrichtungen, wie die den Beschichtungsvorgang durchführende Einrichtung oder die den Kaschiervorgang durchführende Einrichtung räumlich vom Kalander getrennt angeordnet werden, oder
- die Nachfolgeeinrichtungen müssen zwingend zusammen mit der letzten Walze (wenn diese verstellbar ausgebildet ist) mitverstellt werden, was einen erheblichen maschinellen Aufwand erfordert.

Die Mitverstellung der Nachfolgeeinrichtungen mit der Verstellung der letzten Walze wäre deshalb nötig, weil sonst der unabdingbar für eine gleichbleibende Beschichtungsdicke erforderliche parallele Walzenspalt zwischen der letzten Kalanderwalze und der Aufheizwalze bzw. der Kaschierwalze verloren geht.

Da die Mitverstellung der Nachfolgeeinrichtungen sehr unwirtschaftlich ist, wurden die Nachfolgeeinrichtungen, wie der Kaschierkalander, räumlich vom Folienherstellungskalander getrennt, wodurch der Platzbedarf der Anlage beträchtlich steigt und die Gesamtanlage im Preis um mindestens ein Drittel teurer wird.

Durch das weitere Merkmal, nämlich die Anordnung der Vorwärmwalze und der Kaschierwalze zusammen mit der Festwalze etwa auf einer durch die Längsmittelachse aller drei Walzen gezogenen Ebene, wird erreicht, daß die Durchbiegung der letzten Walze, verursacht durch die im letzten Kalanderspalt erzeugte Kalandrierarbeit mittels einer Gegenbiegeeinrichtung, die an auf beiden Walzenzapfen außen angeordneten Zusatzlagern angelenkt ist, wirkungsvoll aufgehoben werden kann, ohne daß die Parallelität der Walzen verloren geht.

Insbesondere hat jedoch die Anordnung der Vorwärmwalze und Kaschierwalze mit der Festwalze des Kalanders etwa auf einer gemeinsamen Ebene den entscheidenden Vorteil, daß eine automatische Regelung der auf dem Kalander hergestellten und mit einer Gewebebahn zusammenkaschierten Folie hinsichtlich ihrer Dickengleichmäßigkeit durchgeführt werden kann, weil für die Beeinflussung der Foliendicke im letzten Kalanderspalt die vorletzte Walze mittels der Kulisse verstellt werden kann. Auch in einem solchen Fall wird die letzte Walze nicht verstellt und die parallelen Spalte zwischen dieser Walze und der Vorwärmwalze und der Kaschierwalze bleiben erhalten, ohne daß eine räumliche Trennung des Folienherstellkalanders von dem Kaschierkalander vorgenommen werden muß.

Der größte Vorteil der Anordnung der Walzen in der Reihenfolge
- Vorheizwalze,
- letzte Kalanderwalze als Festwalze,
- Kaschierwalze
und mit ihren Längsmittelachsen etwa auf einer gemeinsamen Ebene ist, daß die jeweiligen Spalte zwischen diesen Walzen in jeder Situation gleich dick und parallel bleiben, d.h. daß auch die Beschichtungsdicke der Verbundbahn und der Kaschierdruck immer gleich bleibt.

Ausführungsbeispiele von als Beschichtungs- oder Kaschierkalander einzusetzende Kalanderanlagen werden in den Zeichnungen gezeigt und nachfolgend erläutert.

Es zeigen:
- Fig. 1: einen schematisierten Querschnitt durch eine Kalanderanlage.
- Fig. 2: einen schematisierten Querschnitt durch eine Anlage ähnlich der Anlage in Fig. 1, jedoch als Kaschierkalander umgestellt.

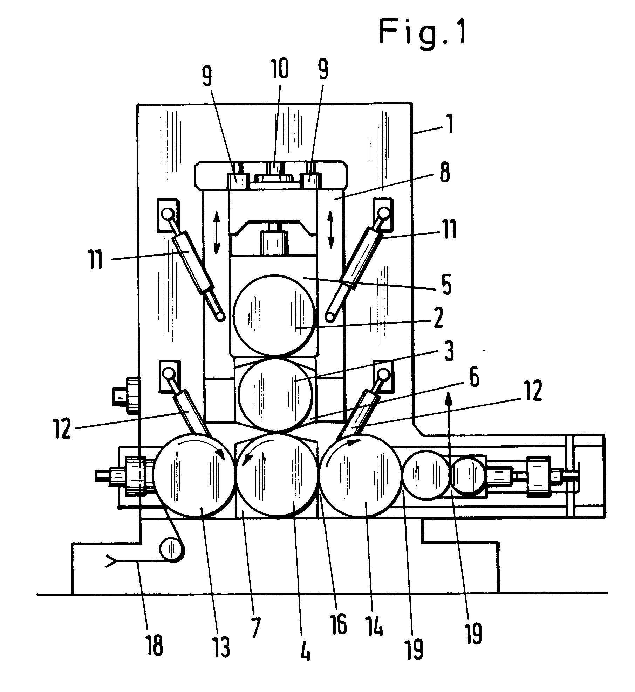

Die in Fig. 1 gezeigte Kalanderanlage setzt sich zusammen aus dem Kalander für die Herstellung der Kunststoffolie, z.B. einer PVC-Folie und dem Teil der Anlage, der zum Beschichten und Kaschieren eingesetzt wird.

In den Kalanderständern 1 sind in einer in Pfeilrichtung verfahrbaren Kulisse 8 die Kalanderwalzen 2 und 3 mit ihren Lagerkörpern 5 und 6 angeordnet.

Die Kulisse 8 wird durch angedeutete Verstellgetriebe 9 zusammen mit den Walzen angehoben und abgesenkt, um den Spalt bzw. die Arbeitsdicke zwischen den Walzen 3 und 4 einstellen zu können.

Die Walze 4 ist ihren Lagerkörpern 7 als Festwalze in den Ständern 1 angeordnet, d.h. daß diese Walze keine senkrechte Verstellmöglichkeit aufweist, wie beispielsweise die Walzen 2 und 3 und auch keine Schrägverstelleinrichtung zum Ausgleichen der Walzendurchbiegung, verursacht durch die Spaltkräfte beim Kalandrieren von Folien.

Für die Walze 2 und 4 sind Gegenbiegeeinrichtungen 11 und 12 in Fig. 1 angedeutet, die mittels Hydraulikzylinder, die sich an den Kalanderständern abstützen, betätigt werden und wodurch die Kalanderwalzen gegengebogen werden, d.h. in ihrer Lage gehalten werden können. Durch die Kalandrierarbeit in den Walzenspalten entsteht eine Neigung der Walzen sich nach außen zuverbiegen. Durch die Gegenbiegeeinrichtungen werden die Walzen zurückgebogen, d.h. etwa in ihrer Lage gehalten.

Der Walze 4 ist die Vorwärmwalze 13 vor- und die Kaschierwalze 14 nachgeordnet. Die Verbundbahn kann dann, je nach Erfordernis, in dem Spalt 19 geprägt werden.

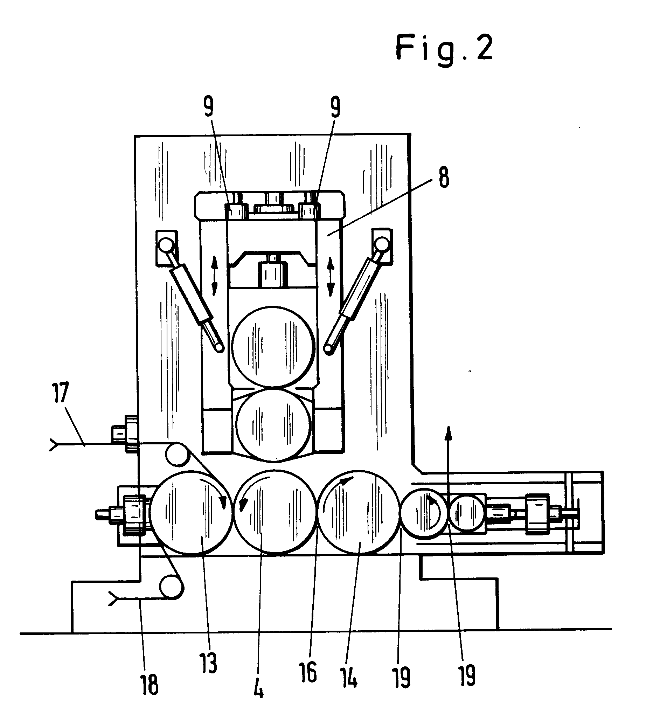

In Fig. 2 wird die Kalanderanlage gezeigt, in der Form eines reinen Kaschierkalanders.

Die beiden in der Kulisse 8 gelagerten Walzen 2 und 3 wurden mittels des angedeuteten Verstellgetriebes 9 von der Walze 4 hochgefahren und die Antriebe der Walzen 2 und 3 abgeschaltet.

Dann wird eine weitere Folie oder auch eine vorgefertigte Verbundbahn 17 über eine Umlenkrolle der Vorwärmwalze 13 zugeführt und in dem Spalt zwischen der Festwalze 4 und der Vorwärmwalze 13 mit einer textilen Verstärkungsbahn 18 oder auch mit einer anderen Folie oder mit einem Folienverbund zusammengeheftet.

Der eigentliche Kaschiervorgang erfolgt in dem Spalt 16, da der Foleinverbund nach einer ausreichenden zusätzlichen Durchheizung durch die letzte temperierbare Kalanderwalze 4 auf die erforderliche Kaschiertemperatur gebracht worden ist. Danach kann im Spalt 19 ein Prägevorgang des Folienverbundes durchgeführt werden.

Die in Fig. 2 gezeigte Anlage ist somit ebenfalls als Kaschierkalander einsetzbar.

## Patentansprüche

1. Mehrwalzen-Beschichtungs- und -Kaschierkalander zum Herstellen einer Verbundbahn aus Kunststoff-oder Kautschukfolien und textilen Verstärkungseinlagen mit mehreren in Kalanderständern (1) angeordneten, antreibbaren Kalanderwalzen (2,3), mit einer mittels Getriebe (9) verstellbaren, Walzenlager aufnehmenden, in den Ständern gelagerten Verstellkulisse (8),
mit einem Getriebe (10) und Antriebsspindeln für die Verstellung der Walzen (2) innerhalb der Kulisse (8), mit durch Hyraulikzylinder betätigte, an den Kalanderständern sich abstützende Walzengegenbiegeeinrichtungen (11,12) für die durch die Kalandrierarbeit in den Walzenspalten und das Gewicht der Walzen entstehende Durchbiegung der Kalanderwalzen und mit Anwärm- und Kaschierwalzen (13,14),
**dadurch gekennzeichnet,**
daß in Arbeitsrichtung des Kalanders die letzte der in den Kalanderständern angeordneten Walzen (4) als Festwalze ausgebildet ist,
daß die Festwalze, die Vorwärmwalze (13) und die Kaschierwalze (14) unter Bildung von Walzenspalten mit ihren Längsmittelachsen sowohl parallel zueinander als auch etwa in einer Ebene angeordnet sind, und
daß in Kaschierrichtung die Vorwärmwalze (13) der Festwalze (4) vorgeordnet und die Kaschierwalze (14) der Festwalze (4) nachgeordnet ist.

## Claims

1. Multi-roll coating and laminating calender for the production of a composite web consisting of plastic films or rubber sheets and reinforcing fabric plies, with several calender rolls (2, 3) that are arranged in a calender frame (1) and can be driven, with an adjusting sliding block (8) that can be adjusted by means of a gear (9), takes the roll bearings, and is supported by the frame,
with a gear (10) and driving spindles for the adjustment of the rolls (2, 3) within the range of the sliding block (8), with roll bending devices (11, 12) that are actuated by hydraulic cylinders and supported by the calender frame and serve for the compensation of the roll deflection caused by the calendering in the roll gaps and the weight of the rolls, and with preheating and laminating rolls (13, 14),
**characterized in that**
the last of the rolls supported by the calender frame - seen in working direction - is designed as a fixed roll (4),
that the fixed roll, the preheating roll (13) and the laminating roll (14) form gaps between them and are arranged in such a way that their centre lines are parallel and form a common level,
and that, seen in laminating direction, the preheating roll (13) is arranged upstream of the fixed roll (4) while the laminating roll (14) is arranged downstream of the fixed roll (4).

## Revendications

1. Calandre à cylindres multiples de couchage et doublage pour la fabrication d'une feuille composite à partir de feuilles en matière plastique ou en caoutchouc et de couches de renforcement en textile qui comprend plusieurs cylindres de calandre (2, 3) qui peuvent être entraînés et qui sont logés dans des montants de calandre (1) avec une coulisse de réglage (8) qui est déplaçable au moyen d'un réducteur (9), reçoit des paliers de cylindre et qui est logée dans les montants, avec un réducteur (10) et des broches d'entraînement pour l'ajustage des cylindres (2) à l'intérieur de la coulisse (8), avec des dispositifs de flexion (11, 12) qui sont actionnés par des vérins hydrauliques, supportés sur les montants de calandre et qui servent à compenser la flexion causée par le calandrage dans les écartements des cylindres et par le poids des cylindres et avec les cylindres de préchauffage et de doublage (13, 14),
**caractérisée**
en ce que le dernier cylindre (4), vu en direction de travail de la calandre, arrangé dans les montants de calandre est conçu comme cylindre fixe, en ce que le cylindre fixe, le cylindre de préchauffage (13) et le cylindre de doublage (14) formant les écartement des cylindres sont arrangés parallèlement avec leurs axes centraux et à peu près dans un plan l'un par rapport à l'autre, en ce que, vu en direction de doublage, le cylindre de préchauffage (13) est arrangé en amont du cylindre fixe (4) et le cylindre de doublage (14) en aval du cylindre fixe (4).
